# EUROPÄISCHE PATENTANMELDUNG

(11) **EP 4 574 861 A1**
(43) Veröffentlichungstag der Anmeldung: **25.06.2025**
(21) Anmeldenummer: 23219281.5
(22) Anmeldetag: 21.12.2023
(51) Int. Cl.: C08G 18/00, B60C 9/00, C08G 18/76, C08G 18/80, C08L 7/00, C08L 25/10, C08L 61/14, D06M 13/395

(54) **WÄSSRIGE TAUCHBADZUSAMMENSETZUNGEN ZUR BEHANDLUNG VON VERSTÄRKUNGSEINLAGEN UND DEREN VERWENDUNG SOWIE VERFAHREN ZUR HERSTELLUNG EINER HAFTENDEN VERSTÄRKUNGSEINLAGE**

(71) Anmelder: EMS-CHEMIE AG, 7013 Domat/Ems (CH)
(72) Erfinder: HOLZSCHUH, Martin, 7013 Domat/EMS (CH); CONRAD, Giacomo, 7411 Sils im Domleschg (CH)
(74) Vertreter: Pfenning, Meinig & Partner mbB

(57) **Zusammenfassung**

Die vorliegende Erfindung betrifft Tauchbadzusammensetzungen zur Behandlung von Verstärkungseinlagen und deren Verwendung zur Herstellung von verstärkten Gummiprodukten. Außerdem betrifft die vorliegende Erfindung Verfahren zur Herstellung einer haftenden Verstärkungseinlage.

## Beschreibung

Die vorliegende Erfindung betrifft Tauchbadzusammensetzungen zur Behandlung von Verstärkungseinlagen und deren Verwendung zur Herstellung von verstärkten Gummiprodukten. Außerdem betrifft die vorliegende Erfindung Verfahren zur Herstellung einer haftenden Verstärkungseinlage.

Bei der Herstellung von verstärkten Gummiprodukten hat es sich als vorteilhaft erwiesen, wenn zur Verbesserung der Haftfestigkeit, zwischen Verstärkungseinlage und dem Gummi ein Haftvermittler eingesetzt wird. Bedeutung hat ein derartiger Haftvermittler insbesondere im Bereich von Riemen als Verstärkungseinlage und anderen hochbelasteten Verbundwerkstoffen mit Verstärkungsfasern. Insbesondere für die Anwendung im Riemenbereich als Steifanwendung werden lösungsmittelhaltige Tauchbäder verwendet, um die nötige Beladung der Korde und dementsprechende Filamentverklebung und daraus resultierende Steifigkeit für Riemen zu erreichen.

Aus dem Stand der Technik sind bereits Haftvermittler zur Herstellung von haftenden Verstärkungseinlagen bekannt. Wobei wasserbasierte Tauchbäder für Weichkorde und lösungsmittelbasierte Tauchbäder für Steifkorde verwendet werden. Verfahrensmäßig kann dabei entweder in einem Ein- oder Zwei-Schrittverfahren vorgegangen werden.

Beim Ein-Schrittverfahren wird eine Imprägnierung des Verstärkungselementes mit einer Mischung aus Resorcinol-Formaldehyd-Latex (RFL) oder bevorzugt Resorcinol-Formaldehyd-frei (RF-frei) und einem Haftvermittler durchgeführt.

Beim Zwei-Schrittverfahren wird zuerst eine Imprägnierung des Verstärkungselementes mit dem Haftvermittler vorgenommen und in einem zweiten Schritt erfolgt die Applikation von RFL (oder bevorzugt RF-frei).

Ein wesentliches Problem im bisherigen Stand der Technik besteht bei den lösungsmittelhaltigen Tauchbadzusammensetzungen darin, dass spezielle Anlagen mit Lösungsmittel-Nachverbrennung betrieben werden müssen und daher dem Explosionsschutz Sorge getragen werden muss. Methylendiphenylisocyanate (MDI) als aktive Komponente im lösungsmittelhaltigen Prozess (z. B. in Toluol) ist als freies Isocyanat gesundheitsschädlich und karcinogen.

Ein wesentliches Problem im bisherigen Stand der Technik besteht bei den lösungsmittelfreien Tauchbadzusammensetzungen darin, dass die Filamentverklebung nicht ausreichend für die Verwendung als Steifkord ist.

Davon ausgehend war es Aufgabe der vorliegenden Erfindung eine Tauchbadzusammensetzung bereitzustellen, die es ermöglicht Verstärkungseinlagen für Gummiprodukte herzustellen, die sehr gute Hafteigenschaften, insbesondere eine sehr gute Haftung im Haftungstest (bezeichnet als H-Test) und einen guten Oberflächenbedeckungsgrad nach dem H-Test, aufweisen, ohne dass die oben - aus der Verwendung von Lösungsmitteln resultierenden - diskutierten Probleme auftreten.

Diese Aufgabe wird von der erfindungsgemäßen wässrigen, feststoffhaltigen Tauchbadzusammensetzung zur Behandlung von Verstärkungseinlagen nach Anspruch 1, das Verfahren zur Herstellung einer haftenden Verstärkungseinlage nach Anspruch 14, die haftenden Verstärkungseinlage nach Anspruch 16 und deren Verwendung nach Anspruch 17 gelöst. Die weiteren abhängigen Ansprüche geben vorteilhafte Weiterbildungen an.

Erfindungsgemäß wird mindestens eine wässrige, feststoffhaltige Tauchbadzusammensetzung zur Behandlung von Verstärkungseinlagen bereitgestellt, die die folgenden Komponenten enthält oder aus diesen Komponenten besteht:
(A) mindestens ein vollständig oder teilweise blockiertes Isocyanat,
(B) mindestens ein Epoxid,
(C) mindestens ein Tensid zur Verbesserung der Benetzungseigenschaften,
(D) mindestens einen Latex sowie
(E) gegebenenfalls mindestens ein Additiv;

### Begriffsdefinitionen

Die erfindungsgemäßen Tauchbadzusammensetzungen sind wässrig, d.h. als flüssige Phase wird Wasser verwendet. Wasser wird im Folgenden nicht als Komponente der Tauchbadzusammensetzung aufgeführt. Vorzugsweise ist die Tauchbadzusammensetzung im Wesentlichen frei von organischen Lösungsmitteln, also von organischen Flüssigkeiten, die nicht an den Reaktionen teilnehmen. Im Wesentlichen frei heißt, es sind weniger als 5 Gew.-%, bevorzugt weniger als 2 Gew.-% an organischen Lösungsmitteln, bezogen auf das Gesamtgewicht der Tauchbadzusammensetzung, enthalten. Vorzugsweise ist die Tauchbadzusammensetzung vollkommen frei von organischen Lösungsmitteln.

Außerdem sind die erfindungsgemäße Tauchbadzusammensetzung bevorzugt im Wesentlichen frei von Resorcin und Formaldehyd und deren Reaktionsprodukten, d.h. es sind in Summe weniger als 1,0 Gew.-%, bevorzugt weniger als 0,5 Gew.-%, besonders bevorzugt weniger als 0,16 Gew.-%, jeweils bezogen auf das Gesamtgewicht der Tauchbadzusammensetzung, enthalten. Besonders bevorzugt sind die Tauchbadzusammensetzungen vollkommen frei von Resorcin und Formaldehyd und deren Reaktionsprodukten.

Die erfindungsgemäßen Tauchbadzusammensetzungen können als ein einzelnes Bad oder als mehrere Bäder, insbesondere zwei Bäder, vorliegen.

Die Begriffe "enthaltend" und "umfassend" in den vorliegenden Ansprüchen und in der Beschreibung bedeuten, dass weitere Komponenten nicht ausgeschlossen sind. Im Rahmen der vorliegenden Erfindung ist der Begriff "bestehend aus" als bevorzugte Ausführungsform der Begriffe "enthaltend" oder "umfassend" zu verstehen. Wenn definiert wird, dass eine Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht".

### Tauchbadzusammensetzung

Im Folgenden werden bevorzugte Ausführungsformen der erfindungsgemäßen Tauchbadzusammensetzung angegeben.

Gemäß einer bevorzugten Ausführungsform der vorliegenden Erfindung beträgt der Feststoffanteil der Tauchbadzusammensetzung 2 bis 40 Gew.-%, bevorzugter 3 bis 30 Gew.-%, besonders bevorzugt 4 bis 22 Gew.-% und noch bevorzugter 5 bis 16 Gew.-%, bezogen auf das Gesamtgewicht der Tauchbadzusammensetzung.

Eine andere bevorzugte Ausführungsform sieht vor, dass die wässrige, feststoffhaltige Tauchbadzusammensetzung die folgende Zusammensetzung aufweist, wobei die Gewichtsteile jeweils auf das Gesamtgewicht von 200 Gewichtsteilen der Tauchbadzusammensetzung bezogen sind:
(A) 0,1 bis 18.0 Gewichtsteile, bevorzugt 0,2 bis 16,0 Gewichtsteile, besonders bevorzugt 1,0 bis 14 Gewichtsteile und noch bevorzugtester 3,0 bis 13 Gewichtsteile,
(B) 0,4 bis 8,0 Gewichtsteile, bevorzugt 0,7 bis 6,0 Gewichtsteile, besonders bevorzugt 1,0 bis 4,0 Gewichtsteile und noch bevorzugtester 1,2 bis 3,0 Gewichtsteile,
(C) 0,01 bis 5,0 Gewichtsteile, bevorzugt 0,02 bis 2 Gewichtsteile, besonders bevorzugt 0,05 bis 0,50 Gewichtsteile und noch bevorzugtester 0,10 bis 0,30 Gewichtsteile,
(D) 5 bis 40 Gewichtsteile, bevorzugt 8 bis 30 Gewichtsteile und besonders bevorzugt 12 bis 25 Gewichtsteile, und noch bevorzugtester 15 bis 20 Gewichtsteile und
(E) 0 bis 20 Gew.-Teile, bevorzugt 0,1 bis 10 Gewichtsteile und besonders bevorzugt 0,1 bis 5 Gewichtsteile, und noch bevorzugtester 0,1 bis 3,
jeweils bezogen auf den Feststoffgehalt.

Eine andere bevorzugte Ausführungsform sieht vor, dass die wässrige, feststoffhaltige Tauchbadzusammensetzung auf mehrere Bäder, insbesondere zwei Bäder aufgeteilt wird. Im Falle von zwei Bädern weisen die beiden Bäder folgende Komponenten auf:
**Bad 1:**
   (A) mindestens ein vollständig oder teilweise blockiertes Isocyanat,
   (B) mindestens ein Epoxid,
   (C) mindestens ein Tensid zur Verbesserung der Benetzungseigenschaften, und gegebenenfalls
   (E) mindestens ein Additiv;
**Bad 2:**
   (D) mindestens einen Latex,
      und gegebenenfalls
   (A) mindestens ein vollständig oder teilweise blockiertes Isocyanat,
      und gegebenenfalls
   (E) mindestens ein Additiv;

Gemäß der vorliegenden Erfindung haben sich als vorteilhafte Blockierungsmittel bei den Isocyanaten insbesondere lactamblockierte Isocyanate erwiesen. Beispiele hierfür sind ε-copralactam und δ-Valerolactam. Die Erfindung umfasst aber selbstverständlich auch andere bekannte Blockierungsmittel. Diese bevorzugt ausgewählt aus der Gruppe bestehend aus
- Monophenolen, insbesondere Phenol, Resorcin, Kresol, Trimethylphenole und tert.-Butylphenole,
- Lactamen, insbesondere ε-Caprolactam, δ-Valerolactam und Laurinlactam,
- primäre, sekundäre und tertiäre Alkohole, Glykolether,
- Oximen, insbesondere Methyl-Ethyl-Ketoxim, Methyl-Amyl-Ketoxim und Cyclohexanonoxim,
- Enol-bildenden Verbindungen, insbesondere Acetoessigester, Acetylaceton,
- sekundäre aromatische Amine,
- Imide,
- Mercaptane,
- Triazol und
- Mischungen hiervon

Bevorzugt ist das Blockierungsmittel ausgewählt aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam und Mischungen hiervon und besonders bevorzugt ausgewählt ist das Verkappungsmittel aus der Gruppe bestehend aus Phenol, ε-Caprolactam und Mischungen hiervon. Am bevorzugtesten ist die MDI-Mischung (A) mit ε-Caprolactam verkappt.

Bei der Haftmittelformulierung hat es sich weiterhin als vorteilhaft erwiesen, wenn als Isocyanate Diisocyanatdiphenylmethan (MDI) und/oder Toluoldiisocyanat (TDI) und/oder Naphthylen-1,5-diisocyanat (NDI) verwendet werden. Die Erfindung umfasst aber selbstverständlich auch alle anderen bekannten Isocyanate, die für derartige Haftvermittlerformulierungen eingesetzt werden können. Hierzu wird beispielhaft auf die US2002/0122938 A1 und die dort beschriebenen Diisocyanate verwiesen.

Nach einer anderen bevorzugten Ausführungsform der vorliegenden Erfindung enthält die verkappte MDI-Mischung (A) MDI-Derivate (d.h. modifizierte MDI), die bevorzugt ausgewählt sind aus der Gruppe bestehend aus MDI-Uretdion, Addukten von MDI und/oder MDI-Oligomeren mit anderen Verbindungen.

Eine weitere bevorzugte Ausführungsform der vorliegenden Erfindung sieht vor, dass das MDI ausgewählt ist aus der Gruppe bestehend aus 4,4'-MDI, 2,4'-MDI, 2,2'-MDI und Mischungen hiervon, wobei der Anteil von 2,4'-MDI und 2,2'-MDI vorzugsweise kleiner als 10 Gew.-%, bevorzugt kleiner als 8 Gew.-% ist und besonders bevorzugt im Bereich von 0,1 bis 6 Gew.-%, jeweils bezogen auf die MDI-Mischung, liegt.

Gemäß einer bevorzugten Ausführungsform enthält die Mischung ein oder mehrere MDI-Oligomere, wobei n in Formel (I) eine ganze Zahl von 1 bis 8 und vorzugsweise von 1 bis 6 ist:

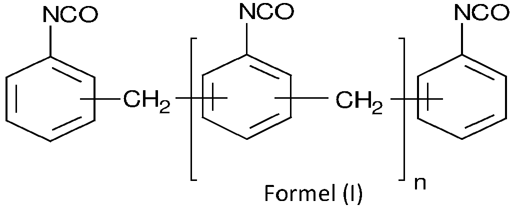

Nach einer weiteren bevorzugten erfindungsgemäßen Ausführungsform weist die MDI-Mischung folgende Zusammensetzung auf:
(i) 25 bis 60 Gew.-%, vorzugsweise 25 bis 49,9 Gew.-% MDI-Monomere;
(ii) 40 bis 75 Gew.-%, vorzugsweise 50 bis 74,9 Gew.-% MDI-Oligomere; und
(iii) 0 bis 9 Gew.-%, vorzugsweise 0,1 bis 6 Gew.-% modifiziertes MDI;
wobei sich die Anteile der Komponenten (i) bis (iii) zu 100 Gew.-% addieren.

MDI-Mischungen aus MDI-Oligomeren der Formel (I), MDI-Monomeren und gegebenenfalls MDI-Derivaten sind unter der Bezeichnung "polymeres MDI" (PMDI) kommerziell erhältlich, z.B. als Voronate (DowDuPont), Suprosec (Huntsman), Elastoflex (BASF), Lupronat (BASF) oder Autofroth (BASF).

Gemäß einer weiteren bevorzugten Ausführungsform der vorliegenden Erfindung ist das mindestens eine Epoxid (B) in der Dispersion löslich und/oder hat ein Molekulargewicht von 50 bis 2000 g/mol. Besonders bevorzugt sind Epoxide mit einem Molekulargewicht von 100 bis 1000, insbesondere wasserlösliche Polyglycidylether, Epoxy-Novolak-Harze, polyfunktionelle Alkylenepoxide, Diglycidether und Bisphenol-A auf basierenden Harzen. Die Erfindung umfasst aber auch alle in der EP 1 221 456 A1 aufgeführten Epoxide. Besonders bevorzugt Erfindung ist das mindestens eine Epoxid (B) ausgewählt aus der Gruppe bestehend aus wasserlöslichen Polyglycidylether, polyfunktionelle Alkylenepoxide, Diglycidether und Mischungen hiervon.

Gemäß einer weiteren bevorzugten Ausführungsform der vorliegenden Erfindung ist das mindestens eine Tensid (C) ausgewählt aus der Gruppe bestehend aus anionischen Tensiden, kationischen Tensiden, nicht-ionischen Tensiden, amphoteren Tensiden, siliciumhaltigen Tensiden, Perfluortensiden, hydrophil modifizierten Polyolefinen und Mischungen hiervon. Die Tenside sind bevorzugt ausgewählt aus der Gruppe bestehend aus Seifen, Alkylbenzolsulfonate, lineare Alkylbenzolsulfonate, Alkansulfonate, Estersulfonate, Methylestersulfonate, Sulfobernsteinsäurederivate, α-Olefinsulfonate, Alkylsulfate, Fettalkoholsulfate, Fettalkoholethersulfate, Fettalkoholpolyglycolethersulfate, Fettalkoholpolyglycolether, Dioctylnatriumsulfosuccinat, Alkylphenolpolyglycolether, Sorbitanfettsäureester, ethoxylierte Sorbitanfettsäureester, Alkylpolyglucoside, Fettsäureglucamide, Fettsäureethoxylate, Fettaminethoxylate, ethoxylierte Triacylglycerole, beidseitig alkylierte Polyethylenglycolether, Alkoholethoxylate, Nonylphenolethoxylate, Polyglycerolfettsäureester, Fettsäurealkanolamide, Aminoxide, Alkyldimethylami-noxide, Alkylpolyglucoside, Saccharoseester, Sorbitanester, Fettsäure-glucamide, Fettsäure-N-methylglucamide, Ampholyte, Betaine, Sulfobetaine, N-(Acylamidoalkyl)betaine, N-Alkyl-β-aminopropionate, N-Alkyl-β-iminopropionate, Salze langkettiger primärer Amine, quartäre Ammoniumsalze, quartäre Phosphoniumsalze, tertiäre Sulfoniumsalze, Pyridiniumsalze, Imidazoliniumsalze, Oxazoliniumsalze, Esterquats, Polyalkylenglycole, alkoxy-lierte Polyalkylenglycole, Polysulfone, Poly(2-hydroxyalkylacrylate), Poly(2-hydroxyalkylmethacry-late), Ethylenoxid-Propylenoxid-Blockcopolymere, Polyethylenglycole, Polypropylenglycole, Polyethylenoxid-Harze, Polypropylen-oxide, Salze von Oligophosphaten, Salze von Polyphosphaten und Mischungen hiervon. Das erfindungsgemäß eingesetzte mindestens eine Tensid (C) ermöglicht eine verbesserte Benetzung der zu behandelnden Verstärkungseinlagen. Insbesondere wird durch das Tensid (C) die Benetzung der Innenfläche von als Verstärkungseinlage verwendeten Faserbündeln ermöglicht und erlaubt so eine verbesserte Steifigkeit.

Eine weitere bevorzugte Ausführungsform sieht vor, dass das mindestens eine Tensid (C) keine Poly(2-hydroxyalkylacrylate) enthält.

Gemäß einer weiteren bevorzugten Ausführungsform der vorliegenden Erfindung ist der mindestens eine Latex (D) ausgewählt aus der Gruppe bestehend aus Styrol-Butadien-Vinylpyridin Copolymer, Styrol-Butadien-Vinylpyridin Copolymer modifiziert mit Carbonsäure, Styrol-Butadien-Copolymer, Styrol-Butadien-Copolymer modifiziert mit Carbonsäure, Nitril-Butadien-Copolymer, Naturlatex, Chloroprenlatex und Mischungen hiervon.

Eine weitere bevorzugte Ausführungsform vorliegender Erfindung sieht vor, dass das mindestens eine Additiv (E) ausgewählt ist aus der Gruppe bestehend aus
- Entschäumern, bevorzugt langkettigen Alkoholen, hochpolymeren Glykolen, Fettsäureethoxylaten, Trialkylmethylaminen, Siliconen oder Mischungen davon, besonders bevorzugt Silicone in Form von Silicon-Emulsionen,
- Organische Polymere, bevorzugt Polysaccharide, Ligninsulfonsäuren, Kraftlignine,
- Füllstoffen, bevorzugt Silikate,
- Farbstoffen, bevorzugt Ruß,
- Konservierungsmitteln,
- Katalysatoren,
- Verdickungsmitteln,
- Säuren,
- Laugen,
- mehrwertigen Alkoholen und
- Mischungen hiervon.

Eine weitere Steigerung der Reaktionsgeschwindigkeit bei der erfindungsgemäßen Haftmittelformulierung kann dadurch erreicht werden, dass als Additiv ein Katalysator in Form einer Metallverbindung zugesetzt wird. Als Katalysator eignen sich dabei Metallverbindungen der Metalle Natrium, Kalium, Cäsium, Strontium, Silber, Cadmium, Barium, Cer, Uran, Titan, Chrom, Zinn, Antimon, Mangan, Eisen, Kobalt, Nickel, Kupfer, Zink, Blei, Calcium und/oder Zirkon. Bevorzugt sind bei den Metallverbindungen diejenigen des Zinks. Geeignete Verbindungen sind hierbei Zinkacetat, Zinksulfat, Zinkcarbonat, Zinkoxid, Zinkacetylacetonat, und/oder Zinkchlorid. Ganz besonders bevorzugt ist Zinkacetat. Der Katalysator liegt vorzugsweise in gelöster Form in der Dispersion vor, wobei der Katalysator bevorzugt in einer Konzentration von 0,0001 bis 0,1 mol/1000 g der Tauchbadzusammensetzung vorliegt.

Eine weitere bevorzugte Ausführungsform der vorliegenden Erfindung sieht vor, dass der mittlere Partikeldurchmesser d50 der verkappten MDI-Mischung 0,1 bis 2 µm; bevorzugt 0,6 bis 1,5 µm beträgt.

Nach einer anderen bevorzugten Ausführungsform vorliegender Erfindung beträgt der Partikeldurchmesser d100 der verkappten MDI-Mischung 0,1 bis maximal 6 µm; bevorzugt 0,6 bis 5 µm.

Gemäß einer weiteren bevorzugten Ausführungsform der vorliegenden Erfindung weist die verkappte MDI-Mischung eine zahlenmittlere Molmasse Mn im Bereich von 550 bis 1200 g/mol und bevorzugt von 700 bis 1100 g/mol auf.

Zur Herstellung eines Tauchbades wird in einem Gefäß, bevorzugt in einem gerührten Gefäß, bei Raumtemperatur zunächst deionisiertes Wasser vorgelegt und danach werden die Komponenten (A), (B), (C), (D) und gegebenenfalls (E) eingerührt.

### Verfahren zur Herstellung einer haftenden Verstärkungseinlage

Die vorliegende Erfindung betrifft außerdem ein Verfahren zur Herstellung einer haftenden Verstärkungseinlage, welches mindestens die folgenden Schritte umfasst:
a) Bereitstellen zumindest einer Verstärkungseinlage;
b) Eintauchen der bereitgestellten Verstärkungseinlage in mindestens eine Tauchbadzusammensetzung wie zuvor definiert;
c) Trocknen der Verstärkungseinlage aus Schritt b) bei 80 bis 240 °C;
d) Einbrennen der Beschichtung der Verstärkungseinlage aus Schritt c) bei 150 bis 250 °C.

Im Folgenden werden bevorzugte Ausführungsformen des erfindungsgemäßen Verfahrens zur Herstellung einer haftenden Verstärkungseinlage angegeben.

Gemäß einer bevorzugten Ausführungsform der vorliegenden Erfindung erfolgt Schritt c) bei Temperaturen von 110 bis 210 °C und bevorzugt von 140 bis 180 °C.

Gemäß einer weiteren Ausführungsform der vorliegenden Erfindung erfolgt Schritt d) bei Temperaturen von 220 bis 240 °C.

Eine weitere bevorzugte Ausführungsform der vorliegenden Erfindung sieht vor, dass die Verstärkungseinlage ausgewählt ist aus einer Verbindung aus der Gruppe bestehend aus Polyamid 6, Polyamid 66, Polyethylenterephthalat, Polyethylennaphthalat, Rayon, Aramid, Baumwolle, Basaltfasern, Sisal, Hanf, Flachs, Kokosfasern und Mischungen hiervon.

Gemäß einer anderen bevorzugten Ausführungsform vorliegender Erfindung wird die Verstärkungseinlage vor Schritt b) in eine wässrige, feststoffhaltige Tauchbadzusammensetzung eingetaucht, die mindestens ein blockiertes Isocyanat enthält und die bevorzugt keine anderen Komponenten enthält, wobei das blockierte Isocyanat (A) MDI-Oligomere der Formel (I) enthält, wobei n eine ganze Zahl von 1 bis 8 ist, 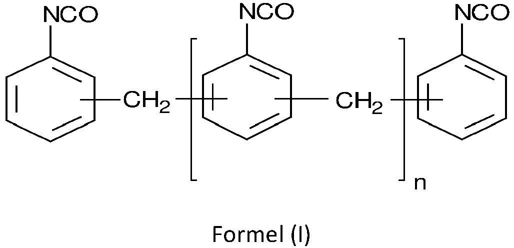 und MDI-Monomere enthält.

Nach dem Eintauchschritt ist es bevorzugt, dass das Trocknen und Einbrennen der Schicht unter den oben angegebenen Bedingungen erfolgt bevor Schritt b) des erfindungsgemäßen Verfahrens durchgeführt wird. Bevorzugt erfolgt das Trocknen bei Temperaturen von 110 bis 210 °C und besonders bevorzugt von 140 bis 180 °C. Dabei ist es weiterhin bevorzugt, dass das Trocknen über einen Zeitraum von 30 bis 120 Sekunden durchgeführt wird. Weiterhin wird das Einbrennen bei Temperaturen von 220 bis 240 °C durchgeführt. Dabei ist es weiterhin bevorzugt, dass das Einbrennen über einen Zeitraum von 20 bis 120 Sekunden durchgeführt wird.

Eine andere bevorzugte Ausführungsform der vorliegenden Erfindung sieht vor, dass der pH-Wert der Tauchbadzusammensetzung vor dem Ausführen von Schritt b) des erfindungsgemäßen Verfahrens und bevor der mindestens eine Latex (D) in die Tauchbadzusammensetzung eingebracht wird in den Bereich von 8 bis 12 bevorzugt 9 bis 11 eingestellt wird, d.h. die Tauchbadzusammen-setzung enthält vor der Einstellung des pH-Werts nur die Komponenten (A) und (C). Als Base wird dabei bevorzugt Ammoniaklösung verwendet. Der mindestens eine Latex (D) wird vor der Ausführung von Schritt b) in die Tauchbadzusammen-setzung eingebracht.

Eine Reifencord oder eine andere Verstärkungseinlage kann in einer herkömmlichen Beschichtungsanlage beschichtet werden, wobei der überschüssige Anteil des Tauchbads mit Hilfe einer mechanischen Vorrichtung und/oder einer Vakuumabsaugung bei 1 bis 5 mbar entfernt und die Beschichtung in einem Ofen für 20 bis 120 Sekunden bei 100 bis 240 °C zuerst getrocknet und anschließend in einem weiteren Ofen für 20 bis 120 Sekunden bei 200 bis 250 °C eingebrannt wird.

### Verfahren zur Herstellung eines verstärkten Gummiprodukts

Die vorliegende Erfindung betrifft außerdem ein Verfahren zur Herstellung eines verstärkten Gummiproduktes, welches die folgenden Schritte umfasst:
(i) Bereitstellen von mindestens einer Lage einer haftenden Verstärkungseinlage hergestellt über das erfindungsgemäße Verfahren wie oben definiert;
(ii) Einbetten von mindestens einer Lage aus einer haftenden Verstärkungseinlage aus Schritt (i) in eine Gummimatrix in einer Pressform;
(iii) Pressen der Lagen aus Schritt (ii);
(iv) Vulkanisieren des verstärkten Gummiprodukts aus Schritt (iii) bei 140 bis 210 °C und 5 bis 110 bar für 5 bis 45 Minuten;
(v) Entnehmen des verstärkten Gummiprodukts aus Schritt (iv) aus der Pressform.

Gemäß einer bevorzugten Ausführungsform der vorliegenden Erfindung handelt es sich bei den verstärkten Gummiprodukten um Reifen, sowohl für PKW, Motorräder als auch für Nutzfahrzeuge und Flugzeuge und um technische Gummierzeugnisse, insbesondere um Förderbänder, Luftfedern, Schläuche (zum Beispiel Train oder Bus bellows) und Treibriemen, z.B. Keilriemen, Keilrippriemen, Rundriemen, Flachriemen oder Zahnriemen.

### Haftende Verstärkungseinlage

Weiterhin betrifft die vorliegende Erfindung eine haftende Verstärkungseinlage, die nach dem erfindungsgemäßen Verfahren herstellbar ist. Vorzugsweise handelt es sich bei der haftenden Verstärkungseinlage um einen Treibriemen.

### Verwendungen

Außerdem betrifft die vorliegende Erfindung die Verwendung der erfindungsgemäßen haftenden Verstärkungseinlage zur Herstellung von verstärkten Gummiprodukten.

Weiterhin betrifft die vorliegende Erfindung die Verwendung der erfindungsgemäßen Tauchbadzusammensetzung zur Beschichtung von Verstärkungseinlagen für Gummiprodukte.

Bei den verstärkten Gummiprodukten handelt es sich bevorzugt um Reifen, sowohl für PKW, Motorräder und Fahrräder als auch für Nutzfahrzeuge und Flugzeuge und um technische Gummierzeugnisse, insbesondere um Förderbänder, Luftfedern, Schläuche und Treibriemen, z.B. Keilriemen, Keilrippriemen, Rundriemen, Flachriemen oder Zahnriemen.

Anhand der nachfolgenden Beispiele soll der erfindungsgemäße Gegenstand näher erläutert werden, ohne diesen auf die hier gezeigten spezifischen Ausführungsformen einschränken zu wollen.

### Messmethoden

Im Rahmen dieser Anmeldung wurden die folgenden Messmethoden verwendet.

### Partikeldurchmesser (dso- bzw. d₁₀₀-Wert)

Der Partikeldurchmesser wurde an einem Pulver oder an einer wässriger Dispersion nach ISO 13320 bei 23 °C mittels Laserbeugung bestimmt. Die Lasermessungen wurden mit einem Granulometer Cilas 1064 der Quantachrome GmbH (Deutschland) durchgeführt.

### H-Test

Die Haftung gemäss H-Test wurde nach ASTM D4776 an einem Polyestercord (1100x3x3 dtex, S 100, z50) bei 160 °C Vulkanisationstemperatur und 15 min Vulkanisationszeit bestimmt.

### Steifigkeit

Die Steifigkeit wurde nach ASTM D885 an einem Polyestercord (1100x3x3 dtex, S 100, z50) bestimmt.

### Höchstzugkraft

Die Höchstzugkraft wurde nach ASTM D885 an einem Polyestercord (1100x3x3 dtex, S 100, z50) bestimmt.

### DPU (Dip Auftrag)

Der DPU wurde nach ASTM D2970 an einem Polyestercord (1100x3x3 dtex, S 100, z50) bestimmt.

### Oberflächenbedeckungsgrad

Der Oberflächenbedeckungsgrad nach dem H-Test wurde durch eine visuelle Prüfung bestimmt, indem das entsprechende Reifenmaterial mit internen Mustern verglichen wurde, die eine Bedeckung von 0 bis 100 % aufwiesen. Eine Bedeckung von 0 % bedeutet, dass sich die haftende Verstärkungseinlage nach dem H-Test vollkommen vom Gummi abgelöst hat, der Bruch erfolgte also in der Grenzschicht zwischen Reifencord und Gummi. Eine Bedeckung von 100 % bedeutet hingegen, dass keine Ablösung der haftenden Verstärkungseinlage vom Gummi erfolgte, d.h. der Bruch erfolgte im Gummi.

### Feststoffgehalt

Der Feststoffgehalt wird durch Abdampfen in einem Halogentrockner (Mettler Halogentrockner HR 73) bestimmt. Dazu werden in eine Aluminiumschale (Durchmesser: 95 mm,) ca. 3 g der Tauchbadzusammensetzung gleichmässig auf dem Schalenboden verteilt. Die Prüfdauer beträgt 25 Minuten bei 80°C. Bei der Anzeigeart wird die Trockenart "Trockengehalt (100 - 0)" gewählt. Angegeben wird der Mittelwert aus drei Bestimmungen.

### Zahlenmittlere Molmasse (Mn)

Die Bestimmung der zahlenmittlere Molmasse (Mn) erfolgt mittels GPC (Gel-Permeations-Chromatographie) mit UV-Detektion.

Zur Messung werden die Proben in THF gelöst (ca. 5 mg in 10 ml) und vor dem Abfüllen in Vials durch Einweg-Spritzenfilter filtriert.

| | |
|---|---|
| Gerät: | Waters 2690 Alliance |
| Software: | Waters Millenium 32 GPC-Modul |
| Säule: | PLgel 100 Ä, Partikelgrösse 3 µm |
| | Länge 30,0 cm |
| | Innendurchmesser 7,5 mm |
| Wellenlänge UV-Detektor: | 254 nm |
| Eluent: | THF |
| Flussrate: | 1,0 ml/min |

Die zahlenmittlere Molmasse (Mn) wird mit konventioneller Kalibrierung ermittelt. Die Kalibrierung erfolgt mit Polystyrol-Standards (Massen 700, 1100 und 2000) sowie Laurinlactam (Masse 197). Es werden drei Bestimmungen durchgeführt. Angegeben wird das arithmetische Mittel der Molmasse in g/mol. Das Lösungsmittel THF wurde in HPLC-Qualität bei EGT-Chemie, Schweiz bezogen. Die Einwegfilter sind erhältlich bei Macherey-Nagel GmbH & Co. KG, Deutschland, unter der Bezeichnung Chromafil A-45/25 (Porengrösse 0,45 µm, Filterdurchmesser 25 mm). Die Einwegspritzen sind erhältlich bei VWR International GmbH, Deutschland.

### Beurteilung Benetzungsfähigkeit

Zur Beurteilung der Benetzungsfähigkeit wurden 2 Gew.-% Tensid in 50 ml Wasser bei 20 °C gelöst, so dass der Flüssigkeitspegel im Becherglas mindestens 3 cm hoch ist. Weiter werden 0.15 Gramm CL-blockiertes Isocyanat mit einer Zahlenmittlere Molmasse Mₙ der mit ε-Caprolactam verkappten MDI-Mischung von 740 g/mol und volumenmittlerer Partikeldurchmesser: dso= 1,2 µm, d₁₀₀ = 3,6 µm und einem Feststoffgehalt von 100% vorbereitet. Die 0.15 Gramm CL-blockiertes Isocyanat werden vorsichtig mit einem Löffel auf die ruhende, ungerührte Tensidlösung gegeben ohne die Lösung mit dem Löffel zu berühren. Als benetzend wird ein Tensid eingestuft, wenn auf der Lösung nach 10 Minuten kein aufschwimmendes CL-blockiertes Isocyanat mehr sichtbar ist. Als nicht benetzend wird ein Tensid eingestuft, wenn über die Hälfte des aufgegebenen CL-blockierten Isocyanats unbenetzt oben aufschwimmt.

### Ausgangsmaterialien

Die in den Beispielen und Vergleichsbeispielen verwendeten Materialien werden in Tabelle 1 zusammengefasst.

**Tabelle 1:**

| | |
|---|---|
| CL-blockierte Isocyanate (A) | Wässrige Dispersion aus mit ε-Caprolactam verkappter MDI-Mischung und pulverförmiges, festes Tensid zur Dispersionsstabilisierung, welches gemäss der Beurteilung der Benetzungsfähigkeit als nicht benetzend eingestuft wurde^{a)} |
| | Feststoffgehalt: 50 Gew.-% |
| | Zahlenmittlere Molmasse Mₙ der mit ε-Caprolactam verkappten MDI-Mischung: 740 g/mol volumenmittlerer Partikeldurchmesser: dso= 1,2 µm, d₁₀₀ = 3,6 µm |
| | Hersteller: EMS-CHEMIE AG, Schweiz |
| Epoxid (B) | Glycerintriglycidylether, flüssig |
| | Hersteller: EMS-CHEMIE AG, Schweiz |
| Tensid (C) | Stantex K 1701, flüssig |
| | Feststoffgehalt: 50 Gew.-% |
| | Hersteller: Pulcra Chemicals |
| | Beurteilung Benetzungsfähigkeit: als benetzend eingestuft |
| VP-Latex (D1) | Wässrige Styrol-Butadien-Vinylpyridin Dispersion |
| | Feststoffgehalt: 41 Gew.-% |
| | Handelsname: Pliocord VP 106 |
| | Hersteller: OMNOVA Solutions, USA |
| RFL (D2) | Wässrige Dispersion aus Resorcin, Formaldehyd, |
| | Styrol-Butadien-Vinylpyridin-Latex |
| | Gewichtsverhältnis 1,0 : 0,6 : 9,2 |
| | Feststoffgehalt: 20 Gew.-% |
| | Hersteller: EMS-CHEMIE AG, Schweiz |
| Ligninsulfonat (E) | Ligninsulfonsäure, Natriumsalz Vertrieb durch Carl Roth GmBH + Co. KG, Deutschland |

| | |
|---|---|
| a) Die Herstellung der verkappten MDI-Mischung (A1) erfolgte durch Verkappung des von der DowDuPont erhältlichen Produkts "Voronate M600" mit ε-Caprolactam. | |

Als Substrat wurde ein Polyestercord (1100x3x3 dtex, S 100, z50) verwendet.

Als Beschichtungsanlage wurde eine Pilotanlage der Mehler Engineering & Service GmbH, Fulda, Deutschland verwendet.

### Beispiele und Vergleichsbeispiele

In Tabelle 2 werden die Resultate der erfindungsgemäßen Beispiele und der Vergleichsbeispiele zusammengefasst.

**Tabelle 2**

| **Komponenten** | **Einheit** | **Vergleichsbeispiele** | | **Beispiele** | | | |
|---|---|---|---|---|---|---|---|
| | | **1** | **2** | **3** | **4** | **5** | **6** |
| **1. Tauchbad** | | | | | | | |
| CL-blockierte Isocyanate (A), Feststoffgehalt 50 Gew.-% | Gew.-Teile | 5 | 5,0 | 7 | 7,0 | 14 | 14,0 |
| Epoxid (B), flüssig | Gew.-Teile | 1,0 | 1,0 | 1,35 | 1,35 | 2,7 | 2,7 |
| Tensid (C), flüssig Feststoffgehalt 50 Gew.-% | Gew.-Teile | - | - | 0,15 | 0,15 | 0,3 | 0,3 |
| Wasser, deionisiert | Gew.-Teile | 94,0 | 94,0 | 91,5 | 91,5 | 83,0 | 83,0 |

| **2. Tauchbad** | | | | | | | |
|---|---|---|---|---|---|---|---|
| RFL (D), Feststoffgehalt 20 Gew.-% | Gew.-Teile | 100,0 | - | 100,0 | - | 100,0 | - |
| CL- blockierte Isocyanate (A), Feststoffgehalt 50 Gew.-% | Gew.-Teile | - | 10,0 | - | 10,0 | - | 10,0 |
| Latex VP (D) Feststoffgehalt 41 Gew.-% | Gew.-Teile | - | 39 | - | 39 | - | 39 |
| Ligninsulfonat (E) >= 93 Gew.-% | Gew.-Teile | - | 3 | - | 3 | - | 3,0 |
| Wasser, deionisiert | Gew.-Teile | 0,0 | 48,0 | 0,0 | 48,0 | 0,0 | 48,0 |

| **Messungen** | | | | | | | |
|---|---|---|---|---|---|---|---|
| Haftung gemäß H-Test 160 °C, 15 min, 130 kN | N | 282 | 212 | 298 | 173 | 293 | 192 |
| Steifigkeit | cN/cord | 86 | 90 | 142 | 156 | 175 | 183 |
| Höchstzugkraft | N/cord | 673 | 668 | 670 | 679 | 663 | 655 |
| DPU (Dip Auftrag) | % | 2,44 | 1,95 | 2,73 | 2,06 | 3,27 | 2,70 |

## Patentansprüche

1. Wässrige, feststoffhaltige Tauchbadzusammensetzung zur Behandlung von Verstärkungseinlagen für Gummiprodukte enthaltend die folgenden Komponenten oder bestehend aus folgenden Komponenten:
(A) mindestens ein vollständig oder teilweise blockiertes Isocyanat,
(B) mindestens ein Epoxid,
(C) mindestens ein Tensid zur Verbesserung der Benetzungs-eigenschaften,
(D) mindestens einen Latex,
(E) gegebenenfalls mindestens ein Additiv.

2. Wässrige, feststoffhaltige Tauchbadzusammensetzung gemäß Anspruch 1,
**dadurch gekennzeichnet, dass** der Feststoffanteil der Tauchbadzusammensetzung 2 bis 40 Gew.-%, bevorzugt 3 bis 30 Gew.-% und besonders bevorzugt 5 bis 27 Gew.-%, bezogen auf das Gesamtgewicht der Tauchbadzusammensetzung, beträgt.

3. Wässrige, feststoffhaltige Tauchbadzusammensetzung gemäß Anspruch 1 oder 2,
**dadurch gekennzeichnet, dass** die Tauchbadzusammensetzung die folgende Zusammensetzung aufweist, wobei die Gewichtsteile jeweils auf den Feststoffgehalt der Tauchbadzusammensetzung bezogen sind:
(A) 0,1 bis 18 Gewichtsteile, bevorzugt 0,2 bis 16 Gewichtsteile, besonders bevorzugt 1,0 bis 14 Gewichtsteile und noch bevorzugter 3,0 bis 13 Gewichtsteile,
(B) 0,4 bis 8,0 Gewichtsteile, bevorzugt 0,7 bis 6,0 Gewichtsteile, besonders bevorzugt 1,0 bis 4,0 Gewichtsteile und noch bevorzugtester 1,2 bis 3,0 Gewichtsteile,
(C) 0,01 bis 5,0 Gewichtsteile, bevorzugt 0,02 bis 2 Gewichtsteile, besonders bevorzugt 0,05 bis 0,50 Gewichtsteile und noch bevorzugtester 0,10 bis 0,30 Gewichtsteile,
(D) 5 bis 40 Gewichtsteile, bevorzugt 8 bis 30 Gewichtsteile und besonders bevorzugt 12 bis 25 Gewichtsteile, und noch bevorzugtester 15 bis 20 Gewichtsteile und
(E) 0 bis 20 Gew.-Teile, bevorzugt 0,1 bis 10 Gewichtsteile und besonders bevorzugt 0,1 bis 5 Gewichtsteile, und noch bevorzugtester 0,1 bis 3.

4. Wässrige, feststoffhaltige Tauchbadzusammensetzung gemäß einem der Ansprüche 1 bis 3,
**dadurch gekennzeichnet, dass** das mindestens eine Isocyanat (A) bevorzugt mit einem Blockierungsmittel ausgewählt aus der Gruppe bestehend aus
• Monophenolen, insbesondere Phenol, Resorcin, Kresol, Trimethylphenole und tert.-Butylphenole,
• Lactamen, insbesondere ε-Caprolactam, δ-Valerolactam und Laurinlactam,
• primäre, sekundäre und tertiäre Alkohole, Glykolether,
• Oximen, insbesondere Methyl-Ethyl-Ketoxim, Methyl-Amyl-Ketoxim und Cyclohexanonoxim,
• Enol-bildenden Verbindungen, insbesondere Acetoessigester, Acetylaceton,
• sekundäre aromatische Amine,
• Imide,
• Mercaptane,
• Triazol und
• Mischungen hiervon
blockiert ist und besonders bevorzugt mit Lactamen, insbesondere ε-Caprolactam, δ-Valerolactam und Laurinlactam, als Blockierungsmittel blockiert ist.

5. Wässrige, feststoffhaltige Tauchbadzusammensetzung gemäß einem der Ansprüche 1 bis 4,
**dadurch gekennzeichnet, dass** das mindestens eine Isocyanat (A) ausgewählt ist aus der Gruppe bestehend aus Diisocyanatdiphenyl-methan (MDI), Toluoldiisocyanat (TDI), Naphthylen-1,5-diisocyanat (NDI) sowie Mischungen hiervon
und/oder das mindestens eine Isocyanat (A) MDI-Derivate enthält, die bevorzugt ausgewählt sind aus der Gruppe bestehend aus MDI-Uretdion, Addukten von MDI, MDI-Oligomeren mit anderen Verbindungen, insbesondere Polyethylenglykol, sowie Mischungen hiervon.

6. Wässrige, feststoffhaltige Tauchbadzusammensetzung gemäß Anspruch 5,
das MDI ausgewählt ist aus der Gruppe bestehend aus 4,4'-MDI, 2,4'-MDI, 2,2'-MDI und Mischungen hiervon, wobei der Anteil von 2,4'-MDI und 2,2'-MDI kleiner als 10 Gew.-%, bevorzugt kleiner als 8 Gew.-% ist und besonders bevorzugt der Anteil von 2,4'-MDI und 2,2'-MDI von 0,1 bis 6 Gew.-% beträgt, bezogen auf die MDI-Mischung, besonders bevorzugt enthält die Mischung ein oder mehrere MDI-Oligomere, wobei n in Formel (I) eine ganze Zahl von 1 bis 8 und vorzugsweise von 1 bis 6 ist:

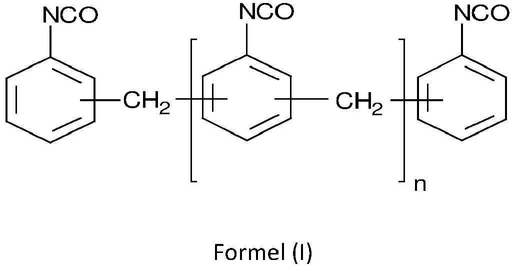

7. Wässrige, feststoffhaltige Tauchbadzusammensetzung gemäß einem der Ansprüche 1 bis 6,
**dadurch gekennzeichnet, dass** die MDI-Mischung folgende Zusammensetzung aufweist:
(i) 25 bis 60 Gew.-%, vorzugsweise 25 bis 49,9 Gew.-% MDI-Monomere;
(ii) 40 bis 75 Gew.-%, vorzugsweise 50 bis 74,9 Gew.-% MDI-Oligomere; und
(iii) 0 bis 9 Gew.-%, vorzugsweise 0,1 bis 6 Gew.-% MDI-Derivate;
wobei sich die Anteile der Komponenten (i) bis (iii) zu 100 Gew.-% addieren.

8. Wässrige, feststoffhaltige Tauchbadzusammensetzung gemäß einem der Ansprüche 1 bis 7,
**dadurch gekennzeichnet, dass** das mindestens eine Epoxid (B) ein Molekulargewicht von 50 bis 2000 g/mol, bevorzugt von 100 bis 1000 g/mol aufweist, wobei das mindestens eine Epoxid (B) bevorzugt ausgewählt ist aus der Gruppe bestehend aus wasserlösliche Polyglycidylether, Epoxy-Novolak-Harze, polyfunktionelle Alkylenepoxide, Diglycidether und Bisphenol-A auf basierenden Harzen und Mischungen hiervon.

9. Wässrige, feststoffhaltige Tauchbadzusammensetzung gemäß einem der Ansprüche 1 bis 8,
**dadurch gekennzeichnet, dass** das mindestens eine Tensid (C) ausgewählt ist aus der Gruppe bestehend aus anionischen Tensiden, kationischen Tensiden, nicht-ionischen Tensiden, amphoteren Tensiden, siliciumhaltigen Tensiden, Perfluortensiden, hydrophil modifizierten Polyolefinen und Mischungen hiervon, besonders bevorzugt aus der Gruppe bestehend aus Seifen, Alkylbenzolsulfonate, lineare Alkylbenzolsulfonate, Alkansulfonate, Ester-sulfonate, Methylestersulfonate, Sulfobernsteinsäurederivate, α-Olefinsulfonate, Alkylsulfate, Fettalkoholsulfate, Fettalkoholethersulfate, Fettalkoholpolyglycolethersulfate, Fettalkoholpolyglycolether, Dioctylnatriumsulfosuccinat, Alkylphenolpolyglycolether, Sorbitanfettsäureester, ethoxylierte Sorbitanfettsäureester, Alkylpolyglucoside, Fettsäureglucamide, Fettsäureethoxylate, Fettaminethoxylate, ethoxylierte Triacylglycerole, beidseitig alkylierte Polyethylenglycolether, Alkoholethoxylate, Nonylphenolethoxylate, Polyglycerolfettsäureester, Fettsäurealkanolamide, Aminoxide, Alkyldimethylami-noxide, Alkylpolyglucoside, Saccharoseester, Sorbitanester, Fettsäure-glucamide, Fettsäure-N-methylglucamide, Ampholyte, Betaine, Sulfobetaine, N-(Acylamidoalkyl)betaine, N-Alkyl-β-aminopropionate, N-Alkyl-β-iminopropionate, Salze langkettiger primärer Amine, quartäre Ammoniumsalze, quartäre Phosphoniumsalze, tertiäre Sulfoniumsalze, Pyridiniumsalze, Imidazoliniumsalze, Oxazoliniumsalze, Esterquats, Polyalkylenglycole, alkoxy-lierte Polyalkylenglycole, Polysulfone, Poly(2-hydroxyalkylacrylate), Poly(2-hydroxyalkyl-methacrylate), Ethylenoxid-Propylenoxid-Blockcopolymere, Polyethylenglycole, Polypropylenglycole, Polyethylenoxid-Harze, Polypropylen-oxide, Salze von Oligophosphaten, Salze von Polyphosphaten und Mischungen hiervon.

10. Wässrige, feststoffhaltige Tauchbadzusammensetzung gemäß einem der Ansprüche 1 bis 9,
**dadurch gekennzeichnet, dass** der mindestens eine Latex (D) ausgewählt aus der Gruppe bestehend aus Styrol-Butadien-Vinylpyridin Copolymer, Styrol-Butadien-Vinylpyridin Copolymer modifiziert mit Carbonsäure, Styrol-Butadien-Copolymer, Styrol-Butadien-Copolymer modifiziert mit Carbonsäure, Nitril-Butadien-Copolymer, Naturlatex, Chloroprenlatex und Mischungen hiervon.

11. Wässrige, feststoffhaltige Tauchbadzusammensetzung gemäß einem der Ansprüche 1 bis 10,
**dadurch gekennzeichnet, dass** das mindestens eine Additiv (E) ausgewählt ist aus der Gruppe bestehend aus
• Entschäumern, bevorzugt langkettigen Alkoholen, hochpolymeren Glykolen, Fettsäureethoxylaten, Trialkylmethylaminen, Siliconen oder Mischungen davon, besonders bevorzugt Silicone in Form von Silicon-Emulsionen,
• Organische Polymere, bevorzugt Polysaccharide, Lignignsulfonsäuren, Kraftlignine,
• Füllstoffen, bevorzugt Silikate,
• Farbstoffen, bevorzugt Ruß,
• Konservierungsmitteln,
• Katalysatoren,
• Verdickungsmitteln,
• Säuren,
• Laugen,
• mehrwertigen Alkoholen und
• Mischungen hiervon.

12. Wässrige, feststoffhaltige Tauchbadzusammensetzung gemäß einem der vorhergehenden Ansprüche,
**dadurch gekennzeichnet, dass** der mittlere Partikeldurchmesser d*₅₀* der verkappten MDI-Mischung 0,1 bis 2 µm; bevorzugt 0,6 bis 1,5 µm beträgt, und/oder der Partikeldurchmesser *d*₁₀₀ der verkappten MDI-Mischung 0,1 bis 6 µm; bevorzugt 0,6 bis 5 µm beträgt, und/oder die verkappte MDI-Mischung ein zahlenmittleres Molekulargewicht Mₙ im Bereich von 550 bis 1200 g/mol und bevorzugt von 700 bis 1100 g/mol aufweist.

13. Verfahren zur Herstellung einer haftenden Verstärkungseinlage, welches mindestens die folgenden Schritte umfasst:
a) Bereitstellen zumindest einer Verstärkungseinlage;
b) Eintauchen der bereitgestellten Verstärkungseinlage in mindestens eine Tauchbadzusammensetzung gemäß einem der Ansprüche 1 bis 9;
c) Trocknen der Verstärkungseinlage aus Schritt b) bei 80 bis 240 °C;
d) Einbrennen der Beschichtung der Verstärkungseinlage aus Schritt c) bei 150 bis 250 °C.

14. Verfahren gemäß Anspruch 13,
**dadurch gekennzeichnet, dass** die Verstärkungseinlage ausgewählt ist aus einer Verbindung aus der Gruppe bestehend aus Polyamid 6, Polyamid 66, Polyethylenterephthalat, Polyethylennaphthalat, Rayon, Aramid, Baumwolle, Basaltfasern, Sisal, Hanf, Flachs, Kokosfasern und Mischungen hiervon.

15. Haftende Verstärkungseinlage herstellbar nach einem Verfahren gemäß einem der Ansprüche 13 oder 14.

16. Verwendung der haftenden Verstärkungseinlage gemäß Anspruch 15 zur Herstellung von verstärkten Gummiprodukten.
